# EUROPÄISCHE PATENTSCHRIFT

(11) **EP 4 035 258 B1**
(45) Veröffentlichungstag und Bekanntmachung des Hinweises auf die Patenterteilung: **15.07.2026**
(21) Anmeldenummer: 20804471.9
(22) Anmeldetag: 04.11.2020
(51) Int. Cl.: H02K 7/14, H02K 9/06, H02K 15/023, H02K 17/20

(54) **KÄFIGLÄUFER MIT STÜTZELEMENT**
CAGE ROTOR WITH SUPPORT ELEMENT
CAGE D'ÉCUREUIL AVEC ÉLÉMENT DE SUPPORT

(30) Priorität: 18.11.2019 EP 19209725
(43) Veröffentlichungstag der Anmeldung: 03.08.2022
(73) Patentinhaber: Innomotics GmbH, 90441 Nürnberg (DE)
(72) Erfinder: BAUER, Christian, 91728 Gnotzheim (DE); BRANDL, Konrad, 93107 Thalmassing (DE); KLÖPZIG, Markus, 91320 Ebermannstadt (DE); SCHLEICHER, Klaus, 90473 Nürnberg (DE)
(74) Vertreter: Michalski Hüttermann & Partner mbB
(86) Internationale Anmeldenummer: PCT/EP2020/080953
(87) Internationale Veröffentlichungsnummer: WO 2021/099118

(56) Entgegenhaltungen:
- EP-A1- 2 549 630
- EP-A2- 1 521 348
- WO-A1-2015/188985
- DE-A1- 102013 202 403
- DE-A1- 19 927 279

## Beschreibung

Die Erfindung betrifft einen Käfigläufer mit und ohne Permanentmagnete, eine Asynchronmaschine mit einem derartigen Käfigläufer und deren Anwendungen.

Die DE102013202403 A1 beschreibt eine ähliche Asynchronmaschine mit einem Käfigläufer.

Käfigläufer von Asynchronmaschinen weisen ein Blechpaket mit darin befindlichen elektrischen Leitern und Kurzschlussringe an den Stirnseiten des Blechpakts auf. Die Kurzschlussringe dieser Käfigläufer der Asynchronmaschinen sind aus elektromagnetischen Gründen aus Werkstoffen/Metalllegierungen mit hoher elektrischer Leitfähigkeit gefertigt. Diese Werkstoffe begrenzen hinsichtlich ihrer mechanischen Festigkeit die Rotordrehzahlen, und die daraus resultierenden Fliehkräfte auf diesen Kurzschlussring.

Die durch das Material (Aluminium, Kupfer, Kupferlegierungen) vorgegebenen Drehzahlgrenzen liegen je nach Achshöhe bei ca. 5000 U/min. Mit anderen Worten, die Drehzahlgrenzen werden durch die Bahngeschwindigkeit und der damit verbundenen Fliehkraftbeanspruchung bestimmt.

Die Kurzschlussringe sind aus einem homogenen Material mit geringem spez. elektrischen Widerstand gefertigt.

Zur Versteifung des Kurzschlussringes wird bei einigen Auslegungen ein Haltering auf einem angedrehten Absatz des Außendurchmessers des Kurzschlussrings vorgesehen.

Wegen des Luftspaltdurchmessers bzw. der Statorbohrung des Stators sind Abmessungen, insbesondere der Außendurchmesser dieser Halteringe auch aus Montagegründen begrenzt.

Der Erfindung liegt deshalb die Aufgabe zugrunde, einen Käfigläufer einer Asynchronmaschine bereitzustellen, der auch für vergleichsweise größere Achshöhen und hohe Drehzahlen über 8000 U/min geeignet ist. Der Käfigläufer soll dabei auch für dementsprechende hohe Bahngeschwindigkeiten ausgelegt sein.

Die wird durch einen Käfigläufer einer Asynchronmaschine nach dem unabhängigen Anspruch 1 und durch eine Verwendung einer Asynchronmaschine nach dem unabhängigen Anspruch 8 gelöst. Vorteilhafte Ausgestaltungen des erfindungsgemäßen Käfigläufers sind in den abhängigen Ansprüchen beschrieben.

Das Stützelement dient vor allem der Aufnahme der Fliehkräfte, ohne in einen Luftspalt einer Asynchronmaschine zur ragen. Dies gelingt, indem das Stützelement mit dem Kurzschlussring zumindest an vorgegebenen Abschnitten an der Innenseite des Kurzschlussringes stoffschlüssig mit dem Kurzschlussring verbunden ist.

Das Stützelement ist aus mechanisch hochfestem Material, das aufgrund seiner vergleichsweise schlechten elektrischen Leitfähigkeit nicht dem Führen eines Stromes dient und geeignet ist, sondern vor allem für die Aufnahme der Fliehkräfte des Kurzschlussrings im Betrieb der Asynchronmaschine vorgesehen ist.

Unter stoffschlüssiger Verbindung wird dabei Schweißen, wie z.B. Elektronenstrahlschweißen oder heißes isostatisches Pressen (HIP) oder Löten verstanden. Es sollen dabei der Kurzschlussring und das Stützelement durch atomare oder molekulare Kräfte unlösbar zusammengehalten werden.

Der somit normalerweise radial weiter außen liegende elektrisch leitfähige Ring aus Kupfer, einer vergleichsweise hochfesten Kupferlegierung oder einen anderen Werkstoff mit guter elektrischer Leitfähigkeit zum Führen des Stromes, bildet den Kurzschlussring.

Zumindest an der radialen Innenseite des Kurzschlussringes befindet sich das Stützelement, das zumindest abschnittsweise - axial und/oder in Umfangsrichtung betrachtet - stoffschlüssig mit der Innenseite des Kurzschlussringes verbunden ist.

Das Stützelement ist in seiner Grundform geometrisch als Ring bzw. Lochscheibe ausgeführt, wobei dessen Außenseite mit der Innenseite des Kurzschlussrings stoffschlüssig verbunden ist.

Das Stützelement kann auch bezüglich seiner Grundform dreieckig, viereckig, fünfeckig etc. ausgeführt sein. In den jeweiligen Eckpunkten sind dann die stoffschlüssigen Verbindungen vorgesehen.

An jeder Stirnseite des magnetisch leitfähigen Körpers sind in einer speziellen Ausführungsform, somit erfindungsgemäß zwei, insbesondere stoffschlüssig mit einander verbundene konzentrische Ringe aus unterschiedlichen Materialien. Radial innerhalb des elektrisch leitenden Kurzschlussringes ist also ein Ring aus Stahl, insbesondere amagnetisch oder aus einem anderen Werkstoff hoher mechanischer Festigkeit zur Entlastung der Umfangsspannungen am äußeren Ring, also dem Kurzschlussring.

Radial innerhalb des elektrisch leitenden Kurzschlussringes kann alternativ auch ein Ring aus einem magnetischen Material hoher mechanischer Festigkeit zur Entlastung der Umfangsspannungen am äußeren Ring, also dem Kurzschlussring vorgesehen sein.

Entscheidend ist, dass der äußere Ring, also der Kurzschlussring im wesentlich den Strom führt und nur in einem geringeren Maße Fliehkräfte aufnimmt bzw. aufnehmen kann, während das Stützelement, also z.B. der innere Ring ausschließlich zur Stabilisierung und Fliehkraftaufnahme, insbesondere im Hochdrehzahlbereich bei hohen Bahngeschwindigkeiten vorgesehen ist.

Der innere Ring, der auch als Stützring bezeichnet werden kann, weist normalerweise eine axiale Dicke auf, die der axialen Dicke des Kurzschlussrings, insbesondere an der Innenseite entspricht. Der Stützring kann aber auch in seiner axialen Ausdehnung größer oder kleiner ausgeführt sein. Dies hängt u.a. von den aufzunehmenden Fliehkraftbeanspruchungen im Betrieb der Asynchronmaschine ab. Der Stützring kann auch tellerringförmig ausgeführt sein, indem sich radialen Verlauf Schwingungsbäuche oder Schwingungstäler befinden.

Um eine darüberhinausgehende Steigerung der Stützwirkung zu erhalten, weist das Stützelement an Vorderseite des Kurzschlussring und/oder an der Rückseite des Kurzschlussrings zusätzliche scheibenförmige Elemente und/oder Radialerstreckungen (Streben und/oder Klauensterne) auf, die ebenfalls zumindest abschnittsweise mit dem Kurzschlussring stoffschlüssig verbunden sind. Das Stützelement kann somit einstückig oder auch modular aufgebaut sein, wobei die einzelnen Module ebenfalls stoffschlüssig miteinander verbunden sind.

Diese scheibenförmigen Elemente und/oder Radialerstreckungen können sich bis zum Luftspalt der Asynchronmaschine erstrecken, um eine zusätzliche Fliehkraftentlastung des Kurzschlussringes zu erhalten.

Diese Radialerstreckungen, bevorzugt an der Rückseite des Kurzschlussringes können auch als Klauenstern oder als Streben ausgeführt sein, um sich somit auch zwischen den aus dem Blechpaket ragenden Leitern zu erstrecken.

Insbesondere die Klauen des Klauensterns bzw. die Streben können auch als Radiallüfter wirken und somit die Kühlung des Käfigläufers verbessern. Dabei ist eine radiale Erstreckung der Klauen bzw. Streben, aber auch ein dazu schräger Verlauf der Klauen bzw. Streben möglich, um die radiale Lüfterwirkung zu verbessern.

Es ist auch eine Ausführung mit Stützelement und einseitig oder doppelseitig angeordnetem Klauenstern, also auf Vorder- und/oder Rückseite des Kurzschlussringes möglich. Die Klauen des Klauensterns können radial kurz oder radial lang ausgeführt werden. Der Vorteil der kurzen Ausführung kann die einfachere Fertigung sein. Es ist ebenso eine Kombination von kurzen und langen Klauen auf einer Seite des Kurzschlussringes möglich.

Es ist auch eine Ausführung mit Stützelement und einseitig oder doppelseitig angeordneten Streben, also auf Vorder- und/oder Rückseite des Kurzschlussringes möglich. Die Streben des Klauensterns können radial kurz oder radial lang ausgeführt werden. Es ist ebenso eine Kombination von kurzen und langen Streben auf einer Seite des Kurzschlussringes möglich.

Um eine mögliche Unwucht des Käfigläufers zu vermeiden kann der Hybridring, also die Kombination von Kurzschlussring und Stützelement auch auf der Welle zentriert werden. Dabei ist es vorteilhaft, wenn axiale Bohrungen bzw. Durchgänge am radial inneren Teil des Stützelements vorhanden sein, um eine Luftströmung im Bereich zwischen Stützelement und Blechpaket zu ermöglichen.

Das Stützelement kann dabei speichenradförmig ausgeführt sein, indem sich ein innerer Ring um die Welle schließt und ein äußerer Ring, über Speichen mit dem inneren Ring verbunden, den Kurzschlussring stützt.

Der Käfigläufer kann auch zusätzlich zu seinem Käfig aus Leitern und Kurzschlussringen noch Permanentmagnete im oder am magnetisch leitfähigen Körper, insbesondere dem Blechpaket aufweisen, um auch in einem Line-Start-Motor eingesetzt zu werden.

Durch die erfindungsgemäß mögliche Steigerung der Läuferdrehzahl, kann eine Steigerung der Motor- oder Generatorleistung einer Asynchronmaschine erzielt werden.

Erfindungsgemäß liegt nun eine hohe Integration eines Käfigläufers vor, der Mittel zur mechanischen Stabilisierung, Kühlung und Leitung des elektrischen Stroms mit geringen Verlusten aufweist.

Insbesondere kann auch eine geblechte Konstruktion des Läufers beibehalten werden. Dadurch treten vergleichsweise geringere Rotorverluste auf und es stellt sich ein besserer Wirkungsgrad im Vergleich zur massiven Ausführung des magnetisch leitfähigen Körpers ein.

Durch diese Maßnahmen stellt sich eine Leistungssteigerung der Asynchronmaschine durch Erhöhung der maximalen Drehzahl ein. Dies wird erreicht unter Beibehaltung anderer Komponenten des Aktivkreises wie einem Stator oder passiven Komponenten, wie den Lagern der Asynchronmaschine.

Die Erfindung sowie weitere vorteilhafte Ausgestaltungen der Erfindung werden anhand prinzipiell dargestellter Ausführungsbeispiele näher erläutert; darin zeigen:
- FIG 1: einen Teillängsschnitt eines Käfigläufers mit einem Stützring,
- FIG 2: eine perspektivische Darstellung eines Käfigläufers mit Stützringen gemäß FIG 1,
- FIG 3: einen Teillängsschnitt eines Käfigläufers mit Stützring und Scheibe,
- FIG 4: eine perspektivische Darstellung eines Käfigläufers mit Stützring und Scheibe gemäß FIG 3,
- FIG 5: einen Teillängsschnitt eines Käfigläufers mit Streben,
- FIG 6: einen Teilquerschnitt eines Käfigläufers gemäß FIG 5,
- FIG 7: einen Teillängsschnitt eines Käfigläufers mit Klauenstern,
- FIG 8: einen Teilquerschnitt eines Käfigläufers gemäß FIG 7,
- FIG 9: einen Ausschnitt einer Draufsicht auf einen Käfigläufer mit Klauenstern oder Strebe,
- FIG 10: einen Teillängsschnitt eines Käfigläufers u.a. mit Scheibe und Strebe,
- FIG 11: einen Teillängsschnitt eines Käfigläufers u.a. mit Strebe,
- FIG 12: ein Längsschnitt einer Asynchronmaschine.

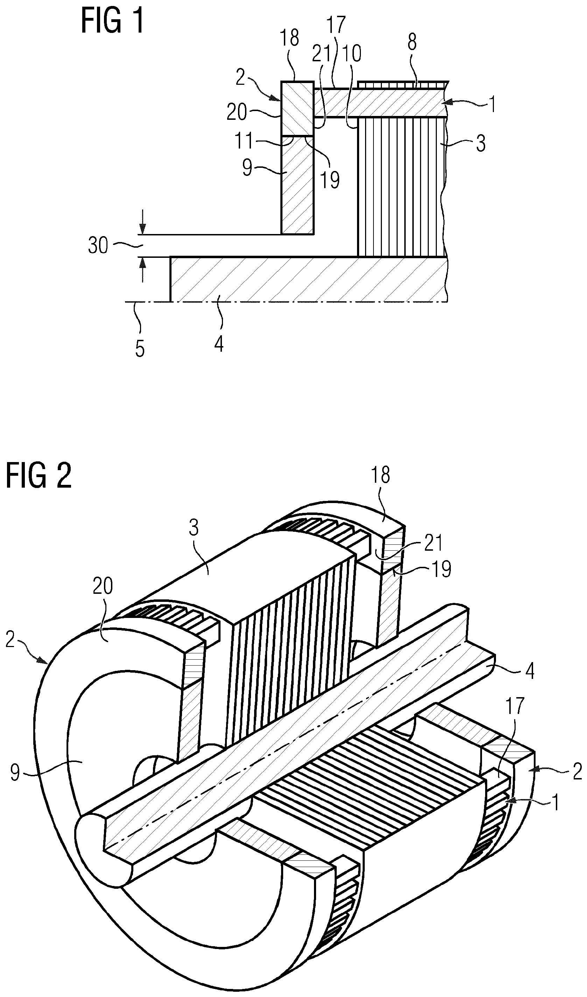

FIG 1 zeigt in einem Teil-Längsschnitt einen Käfigläufer 6 einer Asynchronmaschine 7, wobei in einem magnetisch leitfähigen Körper, massiv oder als Blechpaket 3 ausgeführt, sich in im Wesentlichen axial verlaufenden Nuten 8 elektrische Leiter 1, insbesondere Leiterstäbe angeordnet sind, die an den Stirnseiten 10 des Blechpakets 3 jeweils mit einen Kurzschlussring 2 elektrisch kontaktiert sind. Das Blechpaket 3 ist drehfest mit einer Welle 4 verbunden, und um eine Achse 5 drehbar gelagert. Radial innerhalb des Kurzschlussringes 2 befindet sich ein mechanisch hochfester Stützring 9 amagnetisch oder magnetisch, der zumindest abschnittsweise an seiner äußeren Umfangsfläche mit der Innenseite 19 des Kurzschlussringes 2 stoffschlüssig verbunden ist.

Diese stoffschlüssige Verbindung ist grundsätzlich auch bei den folgenden Ausführungsformen durch ein HIP-Verfahren, ein Schweißverfahren, ein Cold-Spray-Verfahren oder andere Technologien herstellbar.

FIG 2 zeigt in einer perspektivischen Darstellung dieser Ausführungsform, wie der Kurzschlussring 2 von Blechpaket 3 axial beabstandet ist und somit eine Kühlung, insbesondere der freien Leiterstababschnitte, die aus dem Blechpaket 3 ragen und des Kurzschlussringes 2 gewährleistet. Als freie Leiterstababschnitte 17 werden dabei die axialen Abschnitte des Leiterstabes bezeichnet, die aus der Stirnseite 10 des Blechpakets 3 ragen und sich nicht im Kurzschlussring 2 befinden.

Der Stützring 9 weist in dieser Ausführung von der Welle 4 einen Abstand 30 auf, damit u.a. die freien Leiterstababschnitte einen Kühlluftstrom erhalten.

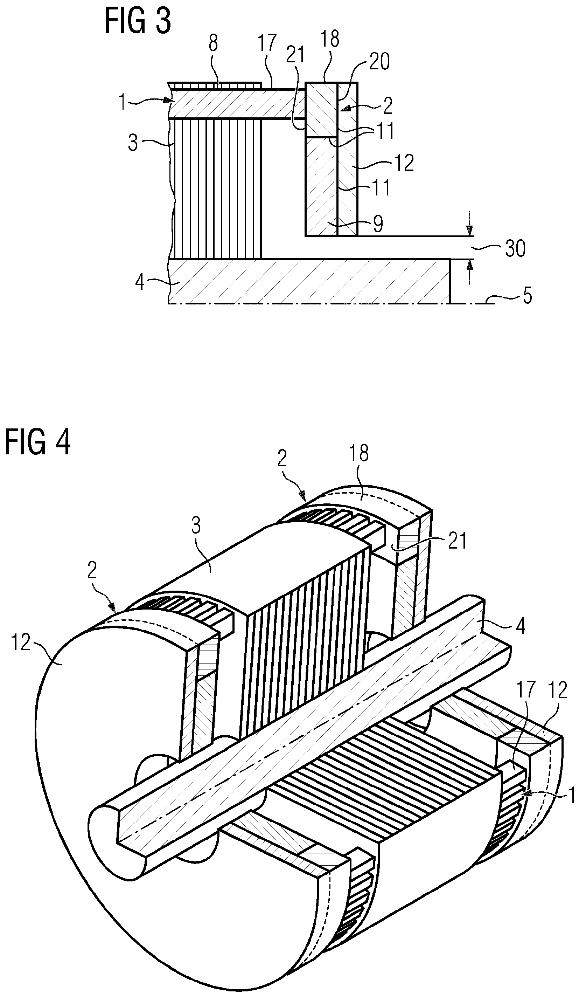

FIG 3 zeigt in einer weiteren Ausführung radial innerhalb des Kurzschlussringes 2 einen Stützring 9 und des Weiteren an einer Vorderseite 20 des Kurzschlussringes 2 eine radiale Erstreckung eines Absatzes, insbesondere eine Scheibe 12 in Richtung eines nicht näher dargestellten Luftspaltes 16, der den Kurzschlussring 2 auch an dessen Vorderseite 20 gegen Fliehkraftbeanspruchungen stabilisiert und stützt. Diese Scheibe 12 ist ebenso mit dem Kurzschlussring 2 und/oder dem Stützring 9 zumindest abschnittsweise stoffschlüssig verbunden.

Sowohl Scheibe 12 als auch Stützring 9 sind miteinander stoffschlüssig verbunden oder einstückig ausgeführt. Der äu-Bere Radius der Scheibe 12 ist nicht größer oder nur geringfügig größer als der äußere Radius des Kurzschlussringes 2. Er sollte auf jeden Fall nicht in den Luftspalt 16 ragen.

Gemäß FIG 4 ist diese Ausführung in einer perspektivischen Darstellung näher gezeigt.

Stützring 9 und Scheibe 12 können entgegen der Schraffuren dieser Teile gemäß FIG 3 und FIG 4 auch aus einem einstückigem Element bzw. Material sein. Demnach wäre dann eine zumindest abschnittsweise stoffschlüssige Verbindung zwischen Innenseite 19 und der Vorderseite 20 des Kurzschlussringes 2 und diesem einstückigen Element vorzusehen. Der Stützring 9 würde damit einen radialen erstreckenden Absatz bzw. eine radial erstreckende Schulter aufweisen.

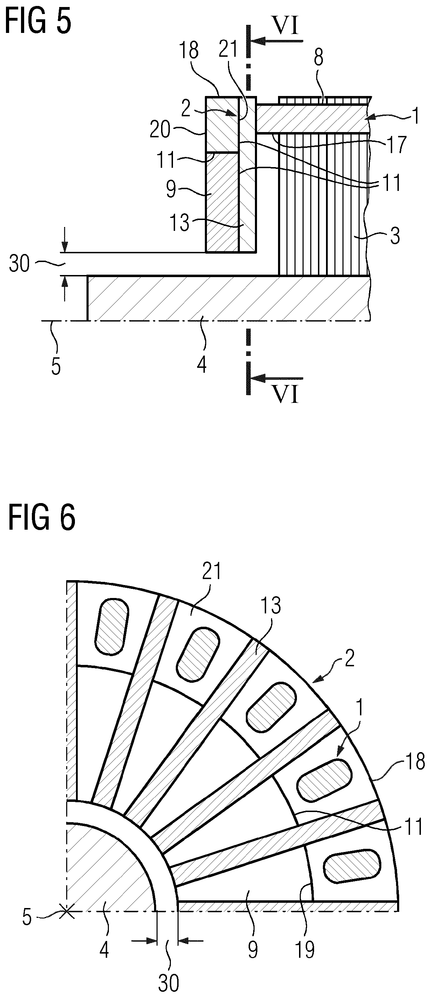

FIG 5 zeigt in einer weiteren Ausführung zwei Ringe, zum einen den Kurzschlussring 2 und den radial weiter innen liegenden Stützring 9 aus hochfestem Material. Des Weiteren sind an der Rückseite 21 des Kurzschlussringes 2, also in dem Zwischenraum zwischen dem Kurzschlussring 2 und der Stirnseite 10 des Blechpakets 3 Streben 13, wobei sich die einzelnen Streben 13 in Richtung Luftspalt 16 erstrecken und auch somit den Kurzschlussring 2 vor allem im Hochdrehzahlbereich zusätzlich gegen Fliehkraftbeanspruchungen stützen. Diese Streben 13 sind ebenso mit dem Kurzschlussring 2 und/oder dem Stützring 9 zumindest abschnittsweise stoffschlüssig verbunden.

FIG 6 zeigt diese Ausführung in einem Teilquerschnitt, wobei sich die einzelnen Streben 13 zwischen den Leiterstäben 1 erstrecken und maximal bis zum Luftspalt 16 reichen.

Stützring 9 und Streben 13 können entgegen der Schraffuren dieser Teile gemäß FIG 5 und FIG 6 auch aus einem einstückigem Element bzw. Material sein. Demnach wäre dann eine zumindest abschnittsweise stoffschlüssige Verbindung zwischen Innenseite 19 und der Rückseite 21 des Kurzschlussringes 2 und diesem einstückigen Element vorzusehen. Der Stützring 9 würde damit radial erstreckende Streben 13 aufweisen.

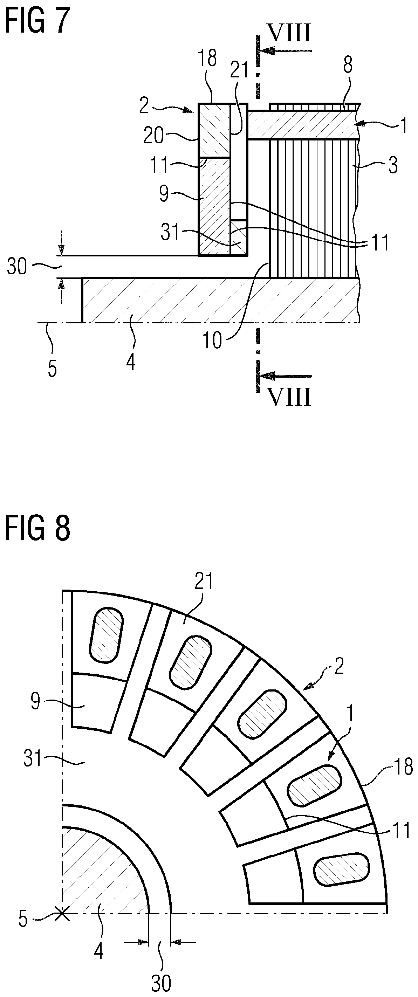

FIG 7 zeigt in einer weiteren Ausführung drei Ringe, zum einen den Kurzschlussring 2, den radial weiter innen liegenden Stützring 9 aus hochfestem Material und einen Ring, der einen Klauenstern 31 bildet. Der Klauenstern 31 dabei weist einen Ring mit radial erstreckenden Klauen auf. Des Weiteren sind an der Rückseite 21 des Kurzschlussringes 2, also in dem Zwischenraum zwischen dem Kurzschlussring 2 und der Stirnseite 10 des Blechpakets 3 Klauen des Klauensterns 31. Wobei sich diese einzelnen Klauen in Richtung Luftspalt 16 erstrecken und auch somit den Kurzschlussring 2 vor allem im Hochdrehzahlbereich zusätzlich gegen Fliehkraftbeanspruchungen stützen. Dieser Klauenstern 31 ist ebenso mit dem Kurzschlussring 2 und/oder dem Stützring 9 zumindest abschnittsweise stoffschlüssig verbunden.

FIG 8 zeigt diese Ausführung in einem Teilquerschnitt, wobei sich die einzelnen Klauen zwischen den Leiterstäben 1 erstrecken und maximal bis zum Luftspalt 16 reichen.

Der Stützring 9 und auch der Klauenstern 31 weist von der Welle 4 einen Abstand 30 auf, damit u.a. die freien Leiterstababschnitte 17 einen Kühlluftstrom erhalten.

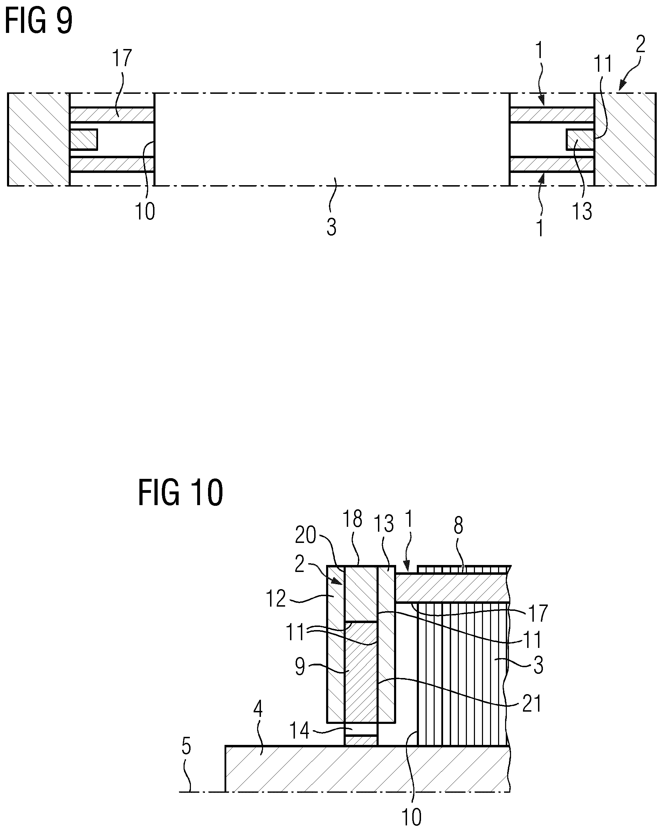

FIG 9 zeigt in einer Teil-Ansicht einen Ausschnitt des Käfigläufers 6, wobei der Kurzschlussring 2 durch den Klauenstern 31 oder Streben 13 gestützt ist, wobei die Klauen bzw. Streben 13 sich jeweils zwischen die Leiterstäbe 1 erstrecken. In dieser Ausführung berühren die Klauen bzw. Streben 13 die Leiterstäbe nicht und können somit mittels eines Kühlluftstromes zum Kühlen insbesondere der Leiterabschnitte 17 beitragen.

Die Klauen des Klauensterns 31 oder die separaten Streben 13 können den Zwischenraum zwischen zwei benachbarten Leiterstäben, der Rückseite des Kurzschlussringes 2 und der Stirnseite 10 des Blechpaketes 3 in axialer und/oder umfänglicher Richtung in vorgebbarem Umfang einnehmen.

FIG 10 zeigt eine weitere Ausführung, bei der der Kurzschlussring 2 durch den hochfesten Stützring 9 auf der Innenseite 19 und axial auf beiden Seiten durch einen Klauenstern 31 (Rückseite 21) und durch eine Scheibe 12 (Vorderseite 20) gestützt ist. Um dennoch eine ausreichende Kühlung im Zwischenraum zwischen Stirnseite 10 des Blechpakets 3 und der Rückseite 21 des Kurzschlussrings 2 zu erhalten, ist in dieser Ausführung im Bereich der Welle 4 ein Durchgang 14 in dem Stützring 9 vorgesehen, so dass Kühlluft axial passieren kann. Der Stützring 9 ist also in diesem Fall z.B. speichenradähnlich aufgebaut.

Um mögliche Unwuchten des Käfigläufers 6 zu vermeiden, kann der Hybridring, also die Kombination von Kurzschlussring 2 und Stützelementen 9, 31, 13 auch auf der Welle 4 zentriert werden. Damit sind aber dann Durchgänge 14 im Hybridring vorzusehen, um eine ausreichende Kühlung im Zwischenraum zwischen Stirnseite 10 des Blechpakets 3 und der Rückseite 21 des Kurzschlussrings 2 zu erhalten.

Die Anordnung der Durchgänge 14 kann vorteilhafterweise mit der Wuchtung des Käfigläufers 6 verbunden werden.

Es kann der Kurzschlussring 2 neben dem Stützring 9 auch mit zwei Klauensternen 31 an der Vorderseite 20 und an der Rückseite 21 versehen werden.

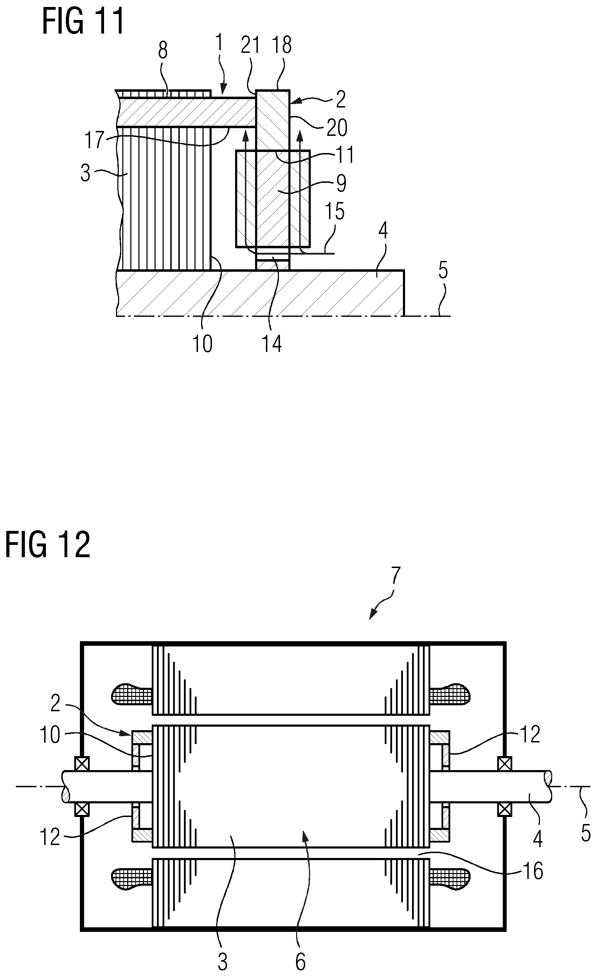

Gemäß FIG 11 ist der Stützring 9 mit Durchgängen 14 versehen. Es sind dort ebenso vorstellbar auf Vorderseite 20 und Rückseite 21 des Kurzschlussringes 2 zusätzlich radial kürzere Streben 13 vorzusehen.

Der Stützring 9 kann auf Vorderseite 20 und Rückseite 21 des Kurzschlussringes 2 zusätzlich auch zwei Klauenstern 31 aufweisen, mit radial kürzeren Klauen. Der Stützring 9 ist somit axial dicker als der Kurzschlussring 2.

Der Stützring 9, der Klauenstern 31 und die Streben 13 sind einfach als Ringscheibe, als Ringscheibe mit im Querschnitt betrachtet rechteckförmigen Klauen und als im Querschnitt betrachtet rechteckförmige Streben ausgeführt ggf. mit unterschiedlichen radialen Längen, wie beispielsweise in FIG 11.

Um jedoch eine festigkeits-, trägheits-, oder strömungstechnisch optimierte Form der oben aufgeführten Elemente zu erhalten, sind diese beispielsweise rundlich, gewölbt, speichenartig oder in ihrem Verlauf mit verschiedenen Querschnitten ausgeführt.

Ergänzend können der Stützring 9 und/oder der Klauenstern 31 und/oder die Streben 13 entweder einstückig ausgeführt und mit dem Kurzschlussring 2 stoffschlüssig verbunden sein oder als Einzelelemente miteinander und mit dem Kurzschlussring 2 stoffschlüssig verbunden sein.

FIG 12 zeigt eine prinzipielle Asynchronmaschine 7, bei der alle diese Ausführungsbeispiele ohne Probleme einsetzbar sind, da diese Ausführungsbeispiele sich lediglich auf den Käfigläufer 6 beziehen und andere Komponenten wie Stator, Gehäuse, Lager etc. nicht verändert werden müssen. Dies führt zu einer Leistungssteigerung der gesamten Asynchronmaschine 7 so dass bei Anwendungen in Kompressoren, Lüfter und Antriebsbereich deutlich Leistungssteigerungen aufgrund höherer Drehzahlen erzielt werden können.

Grundsätzlich kann der erfinderische Gedanke auch bei Käfigläufern 6 eingesetzt werden, deren Kurzschlussring 2, also die Rückseite 21 des Kurzschlussrings 2 direkt an der Stirnseite 10 des Blechpakets 3 anliegt (FIG 12). Dabei ist ein Stützring 9 an der Innenseite 19 und ggf. ergänzend eine Scheibe 12 oder ein Klauenstern 31 oder Streben 13 an der Vorderseite des Kurzschlussrings 2 vorzusehen.

Scheibe 12, Klauenstern 31 oder die Streben 13 können an der Außenseite 18 des Kurzschlussrings 2 auch einen axialen Übergriff aufweisen, der zusätzlich Fliehkräfte des Kurzschlussringes 2 aufnehmen kann.

Grundsätzlich kann bei allen Ausführungsformen der Käfigläufer 6 neben dem Kurzschlussring 2 und den Leitern 1 auch Permanentmagnete enthalten, um so als PM-Linestart-Motor eingesetzt zu werden. Dabei wird der Motor direkt ans Netz angeschlossen und fährt asynchron mithilfe des Käfigs, also über die Kurzschlussringe 2 und kurzgeschlossene Leiter 1 hoch in die synchrone Drehzahl.

## Patentansprüche

1. Käfigläufer (6) einer Asynchronmaschine (7) mit einem magnetisch leitfähigen Körper, insbesondere einem Blechpaket (3), das im Wesentlichen axial verlaufende Nuten (8) mit Leitern (1) aufweist, die an den Stirnseiten (10) des magnetisch leitfähigen Körpers mittels Kurzschlussringen (2) elektrisch leitend verbunden sind, wobei die Kurzschlussringe (2) eine Außenseite (18), eine Innenseite (19), eine Vorderseite (20) und eine Rückseite (21) aufweisen, wobei der Kurzschlussring (2) vom Blechpaket (3) axial beabstandet ist, wobei sich zumindest radial innerhalb der Kurzschlussringe (2), also der Innenseite (19) ein Stützelement aus hochfestem Material befindet, das mit dem Kurzschlussring (2) zumindest abschnittsweise stoffschlüssig verbunden ist, wobei das Stützelement (9) an der Vorderseite (20) und/oder der Rückseite (21) des Kurzschlussringes (2) eine radiale Erweiterung in Richtung eines Luftspaltes (16) aufweist und den Kurzschlussring (2) auf der Vorderseite (20) und/oder der Rückseite (21) zumindest teilweise bedeckt, wobei dort die radialen Erweiterungen und der Kurzschlussring (2) zumindest abschnittsweise stoffschlüssig verbunden sind, wobei zumindest zwischen der jeweiligen Stirnseiten (10) des magnetisch leitfähigen Körpers und der jeweiligen Rückseite (20) des Kurzschlussrings (2) die radialen Erweiterungen des Stützelements (9) scheiben-, klauen-, oder strebenförmig ausgeführt sind, **dadurch gekennzeichnet, dass** im Bereich einer Welle (4) ein Durchgang (14) in dem als Stützring (9) ausgeführten Stützelement vorgesehen ist, so dass Kühlluft axial passieren kann, um eine Kühlung von freien Leiterstababschnitten (17) zu erhalten.

2. Käfigläufer (6) nach Anspruch 1, **dadurch ge- kennzeichnet**, dass der Kurzschlussring (2) und der Stützring (9), der insbesondere tellerringförmig ausgeführt ist auf einer Welle (4) zentriert sind.

3. Käfigläufer (6) nach Anspruch 1 oder 2, **dadurch gekennzeichnet, dass** das Stützelement (9) speichenradförmig oder als Lochscheibe ausgeführt ist.

4. Käfigläufer (6) nach einem der vorhergehenden Ansprüche,
**dadurch gekennzeichnet, dass** die klauen-, oder strebenförmig ausgeführten radialen Erweiterungen (13) des Stützelements (9) einen schrägen Verlauf aufweisen.

5. Käfigläufer (6) nach einem der vorhergehenden Ansprüche,
**dadurch gekennzeichnet, dass** das Stützelement (9) einstückig oder modular ausgeführt ist.

6. Asynchronmaschine (7) mit einem Käfigläufer (6), nach einem der oben genannten Ansprüche, wobei eine Drehzahl im Betrieb der Asynchronmaschine (7) von größer 5000 U/min, insbesondere größer 8000 U/min erreichbar ist.

7. Asynchronmaschine (7) mit einem Käfigläufer (6), nach Anspruch 6, **dadurch gekennzeichnet, dass** der Käfigläufer (6) zusätzlich Permanentmagnete im oder am magnetisch leitfähigen Körper aufweist, um als Line-Start-Motor eingesetzt zu werden.

8. Verwendung einer Asynchronmaschine (7) nach Anspruch 6 oder 7, u.a. bei Kompressoren, Lüftern und Fahrzeugantrieben.

## Claims

1. A cage rotor (6) of an asynchronous machine (7) having a magnetically conductive body, in particular a lamination stack (3), which has substantially axially extending slots (8) with conductors (1) that are electrically conductively connected at the end faces (10) of the magnetically conductive body by means of short-circuit rings (2), wherein the short-circuit rings (2) have an outer side (18), an inner side (19), a front side (20), and a rear side (21), wherein the short-circuit ring (2) is axially spaced apart from the lamination stack (3), wherein a support element of high-strength material is located at least radially inside the short-circuit rings (2), i.e., on the inner side (19), said support element being materially bonded to the short-circuit ring (2) at least in sections, wherein the support element (9) has on the front side (20) and/or the rear side (21) of the short-circuit ring (2) a radial extension in the direction of an air gap (16) and at least partially covers the short-circuit ring (2) on the front side (20) and/or the rear side (21), wherein there the radial extensions and the short-circuit ring (2) are materially bonded at least in sections, wherein at least between the respective end faces (10) of the magnetically conductive body and the respective rear side (20) of the short-circuit ring (2) the radial extensions of the support element (9) are designed in the form of disks, claws, or struts, **characterized in that**, in the region of a shaft (4), a passage (14) is provided in the support element designed as a support ring (9), so that cooling air can pass axially in order to obtain cooling of free conductor bar sections (17).

2. The cage rotor (6) according to claim 1, **characterized in that** the short-circuit ring (2) and the support ring (9), which is in particular designed in a washer shape, are centered on a shaft (4).

3. The cage rotor (6) according to claim 1 or 2, **characterized in that** the support element (9) is designed as a spoked wheel or as a perforated disk.

4. The cage rotor (6) according to any one of the preceding claims, **characterized in that** the claw-shaped or strut-shaped radial extensions (13) of the support element (9) have an oblique profile.

5. The cage rotor (6) according to any one of the preceding claims, **characterized in that** the support element (9) is designed as one piece or in a modular manner.

6. An asynchronous machine (7) having a cage rotor (6) according to one of the above-mentioned claims, wherein a speed during operation of the asynchronous machine (7) of greater than 5000 rpm, in particular greater than 8000 rpm, is achievable.

7. An asynchronous machine (7) with a cage rotor (6) according to claim 6, **characterized in that** the cage rotor (6) additionally has permanent magnets in or on the magnetically conductive body in order to be used as a line-start motor.

8. Use of an asynchronous machine (7) according to claim 6 or 7, among other things, in compressors, fans, and vehicle drives.

## Revendications

1. Rotor à cage (6) d'une machine asynchrone (7) ayant un corps magnétiquement conducteur, en particulier un paquet de tôle (3), qui présente des rainures (8) s'étendant essentiellement axialement avec des tubes (1) reliés électriquement sur les faces (10) du corps magnétiquement conducteur au moyen d'un anneau de court-circuit (2), les anneaux de court-circuit (2) étant présentent une face extérieure (18), une face intérieure (19), une face avant (20) et une face arrière (21), l'anneau de court-circuit (2) étant à une distance axiale du paquet en tôle (3), un élément de support en matériau haute résistance se trouvant au moins radialement à l'intérieur des anneaux de court-circuit (2), c'est-à-dire à l'intérieur de la face intérieure (19), qui est associé à l'anneau de court-circuit (2) est relié de manière étanche, au moins par sections, l'élément de support (9) présentant sur la face avant (20) et/ou sur la face arrière (21) de l'anneau de court-circuit (2) une extension radiale en direction d'une fente à air (16), et recouvre partiellement au moins la bague de court-circuit (2) sur la face avant (20) et/ou sur la face arrière (21), dans lequel, là, les prolongements radiaux et l'anneau de court-circuit (2) sont reliés au moins par sections de manière cohérente avec le matériau, les prolongations radiales de l'élément d'appui (9) étant situées au moins entre les faces frontales respectives (10) du corps magnétiquement conducteur et la face arrière respective (20) de l'anneau de court-circuit (2) sont réalisés sous la forme d'un disque, d'un raccord ou d'une tige, **caractérisés en ce qu'**un passage (14) est prévu dans la zone d'un arbre (4) dans l'élément de support réalisé comme anneau d'appui (9), de sorte que l'air de refroidissement puisse passer axialement pour obtenir un refroidissement des sections libres de conducteur (17).

2. Rotor à cage (6) selon la revendication 1, **caractérisé en ce que** la bague de court-circuit (2) et la bague de support (9), qui est notamment en forme de bague à flasque, sont centrées sur un arbre (4).

3. Rotor à cage (6) selon la revendication 1 ou 2, **caractérisé en ce que** l'élément de support (9) est conçu en forme de roue à rayons ou sous la forme d'un disque perforé.

4. Rotor à cage (6) selon l'une des revendications précédentes, **caractérisé en ce que** les extensions radiales (13) de l'élément de support (9), réalisées en forme de griffes ou d'entretoises, présentent un tracé incliné.

5. Rotor à cage (6) selon l'une des revendications précédentes, **caractérisé en ce que** l'élément de support (9) est conçu en une seule pièce ou de manière modulaire.

6. Machine asynchrone (7) avec un rotor à cage (6) d'après l'une des revendications susmentionnées, permettant à ladite machine asynchrone (7) d'atteindre, en fonctionnement, une vitesse de rotation supérieure à 5 000 tr/min, et en particulier supérieure à 8 000 tr/min.

7. Machine asynchrone (7) avec un rotor à cage (6), selon la revendication 6, **caractérisée en ce que** le rotor à cage (6) comporte en outre des aimants permanents dans ou sur le corps magnétiquement conducteur, afin de pouvoir être utilisé comme moteur à démarrage direct.

8. Utilisation d'une machine asynchrone (7) selon la revendication 6 ou 7, notamment pour les compresseurs, les ventilateurs et les entraînements de véhicules.
